# DEMANDE DE BREVET EUROPEEN

(11) **EP 2 592 332 A1**
(43) Date de publication de la demande: **15.05.2013**
(21) Numéro de dépôt: 12191497.2
(22) Date de dépôt: 06.11.2012
(51) Int. Cl.: F21S 8/10, F21V 7/00, F21W 101/14, F21Y 105/00

(54) **Dispositif optique comportant une pluralité de faces réfléchissantes**

(30) Priorité: 10.11.2011 FR 1160246
(71) Demandeur: VALEO VISION, 93012 Bobigny Cedex (FR)
(72) Inventeur: Albou, Pierre, 75013 PARIS (FR); Puente, Jean-Claude, 93190 LIVRY GARGAN (FR)

(57) **Abrégé**

L'invention concerne un dispositif optique (10), notamment de véhicule automobile, comportant :
- au moins trois faces réfléchissantes (14a ; 22a) agencées de manière à ce qu'un rayon lumineux (i3 ; i6) provenant de l'extérieur du dispositif et atteignant l'une de ces faces soit réfléchi vers une autre de ces faces,
- au moins une source de lumière (18 ; 24 ; 32) capable d'émettre des rayons lumineux (i1,i2;i5;i7) dont le trajet est modifié par l'une au moins des faces réfléchissantes de sorte que ces rayons lumineux participent au moins partiellement, voire totalement, à une fonction photométrique réglementaire du dispositif, notamment une fonction de signalisation.

## Description

L'invention concerne notamment un dispositif optique comprenant une pluralité de faces réfléchissantes.

La réglementation impose d'équiper les véhicules automobiles de dispositifs catadioptriques ou rétro-réfléchissants pour signaler leur présence à d'autres usagers de la route lorsque ces véhicules sont éclairés.

Un dispositif catadioptrique comporte généralement trois faces réfléchissantes agencées de manière à ce qu'un rayon lumineux atteignant ce dispositif soit réfléchi par ce dispositif suivant une direction sensiblement parallèle à sa direction d'incidence.

Un tel dispositif catadioptrique présente l'inconvénient d'être compliqué à fabriquer.

La demande de brevet FR 2 728 254 décrit un feu multifonction réalisant une fonction catadioptrique et une autre fonction photométrique. Ce dispositif présente une surface d'émission de lumière qui se partage en plusieurs plages éclairantes, chacune de ces plages éclairantes étant soit associée uniquement à la fonction catadioptrique, soit uniquement à l'autre fonction photométrique. Il en résulte une baisse significative de la superficie des plages dédiées à l'autre fonction photométrique et par conséquent de l'intensité lumineuse de cette fonction photométrique que réalise ce dispositif.

L'invention vise notamment à pallier les inconvénients précités.

L'invention a ainsi pour objet un dispositif optique, notamment de véhicule automobile, comportant :
- au moins trois faces réfléchissantes agencées de manière à ce qu'un rayon lumineux provenant de l'extérieur du dispositif et atteignant l'une de ces faces soit réfléchi vers une autre de ces faces,
- une source de lumière capable d'émettre des rayons lumineux pour au moins certains desquels le trajet est modifié par l'une au moins des faces réfléchissantes de sorte que ces rayons lumineux participent au moins partiellement, voire totalement, à une fonction photométrique réglementaire du dispositif, notamment une fonction de signalisation.

L'invention permet notamment d'utiliser lesdites faces réfléchissantes, d'une part, comme catadioptre lorsque la source de lumière est éteinte, et d'autre part, comme surface lumineuse émettrice d'une autre fonction photométrique lorsque la source de lumière est allumée. Le dispositif selon l'invention peut ainsi être relativement compact et simple du fait que ces faces réfléchissantes servent à la fois lorsque la source de lumière est éteinte et lorsque celle-ci est allumée. Il est à noter que lorsque les faces réfléchissantes servent comme surface émettrice de lumière, la fonction catadioptrique réalisée par le dispositif n'est plus ou est peu perceptible pour un observateur situé à l'extérieur du dispositif, étant en quelque sorte masquée par l'autre fonction photométrique réglementaire.

La source de lumière et les faces réfléchissantes sont de préférence portées par un boîtier, de sorte que le dispositif dans son ensemble soit facilement manipulable.

Dans un exemple de mise en oeuvre de l'invention, les faces réfléchissantes sont agencées de manière à ce qu'un rayon lumineux atteignant le dispositif avec une direction d'incidence prédéterminée soit réfléchi par ce dispositif dans une direction sensiblement parallèle à cette direction d'incidence.

Les faces réfléchissantes forment avantageusement un catadioptre.

En variante, la direction du rayon lumineux réfléchi est différente de la direction d'incidence, ces directions faisant entre elles un angle supérieur à 0,3° degré, notamment supérieur à 1° degré ou supérieur à 1,5° degrés voire supérieur à 2° degrés.

Ainsi, dans des conditions d'utilisation normale du dispositif, le faisceau réfléchi par le dispositif est redressé par rapport au faisceau incident.

Ceci permet notamment à la lumière qui est émise par un projecteur d'un véhicule automobile tiers, vers le dispositif, d'être réfléchie utilement vers les yeux du conducteur de ce véhicule et non vers le projecteur.

Le cas échéant, les faces réfléchissantes du dispositif sont jointives deux à deux.

Par exemple, les faces réfléchissantes sont venues de matière afin de former une pièce monolithique.

En variante, les faces réfléchissantes sont formées par des pièces distinctes et assemblées ensemble par exemple par collage, notamment à l'aide de colle électriquement conductrice.

Si on le souhaite, ces pièces peuvent être en contact l'une avec l'autre par une arête de leur tranche de manière à ce que les faces réfléchissantes associées soient jointives deux à deux sans que ces tranches ne soient entièrement en appui l'une contre l'autre.

Ceci permet, lorsque les différentes pièces distinctes formant les faces réfléchissantes comportent chacune une source de lumière, de relier électriquement les pièces grâce à la colle conductrice, et ainsi d'éviter l'utilisation de câbles électriques supplémentaires pour l'alimentation électrique des sources de lumière. L'invention peut ainsi permettre d'améliorer encore la compacité et la simplicité du dispositif.

En variante encore, les faces réfléchissantes sont distantes les unes des autres, à savoir elles ne sont pas jointives.

Préférentiellement, les faces réfléchissantes sont exactement au nombre de trois.

Dans un exemple de mise en oeuvre de l'invention, chaque face réfléchissante présente un contour triangulaire, notamment triangulaire isocèle.

Ceci peut permettre de produire de manière simple les faces réfléchissantes du dispositif, étant par exemple toutes identiques.

Si on le souhaite, les faces réfléchissantes sont jointives en un sommet commun.

Il est ainsi possible de réaliser un miroir présentant une forme en 'coin de cube' formant catadioptre.

Dans un exemple de mise en oeuvre de l'invention, le dispositif comporte une unique source de lumière.

Le cas échéant, cette unique source de lumière est agencée pour pouvoir émettre de la lumière de manière à ce que cette lumière apparaisse, pour un observateur extérieur, comme provenant d'au moins l'une des faces réfléchissantes du dispositif, éventuellement comme provenant de toutes les faces réfléchissantes du dispositif.

Dans un autre exemple de mise en oeuvre de l'invention, le dispositif comporte une pluralité de sources de lumière.

Si on le souhaite, le dispositif peut comporter autant de sources de lumière que de faces réfléchissantes.

Eventuellement, les sources de lumière sont connectées électriquement en série.

En variante, les sources de lumière sont connectées électriquement en parallèle.

Si on le souhaite, chaque face réfléchissante du dispositif est associée à une unique source lumineuse.

En variante, une même source lumineuse peut être associée à plusieurs faces réfléchissantes du dispositif, voire être associée à la totalité des faces réfléchissantes du dispositif.

On entend par 'source lumineuse associée à une face réfléchissante' le fait que cette source lumineuse est capable d'émettre des rayons lumineux pour au moins certains desquels le trajet est modifié par cette face réfléchissante.

Dans un exemple de mise en oeuvre de l'invention, le dispositif comprend au moins une plaque comportant au moins une couche agencée pour former au moins l'une des faces réfléchissantes.

Préférentiellement, la plaque est une plaque multicouche.

Cette plaque multicouche comporte avantageusement, en plus de la couche formant la face réfléchissante, au moins une couche agencée pour former la source de lumière associée à cette face réfléchissante.

Avantageusement, la couche formant la face réfléchissante est une couche métallique, notamment réalisée en aluminium ou en argent.

Le cas échéant, la couche formant la face réfléchissante peut être portée par une couche substrat, cette couche substrat étant notamment réalisée en verre ou en résine.

Dans un exemple de mise en oeuvre de l'invention, la couche formant la face réfléchissante forme une première électrode capable de participer à l'alimentation électrique de la source de lumière associée à cette face réfléchissante.

Eventuellement, la première électrode est une couche métallique qui, si on le souhaite, peut être encapsulée par une résine ou une lame de verre.

Si on le souhaite, cette première électrode peut comporter au moins une piste conductrice d'électricité pour alimenter électriquement la source lumineuse.

Préférentiellement, la piste conductrice s'étend au moins partiellement sur un pourtour du substrat.

L'électrode peut, par exemple, être reliée à une source d'alimentation par un ou plusieurs circuit(s) électrique(s), notamment flexible(s), ce circuit pouvant par exemple être sur une carte flexible.

Si on le souhaite, la plaque multicouche peut comporter, outre cette première électrode, une couche formant une deuxième électrode, capable de participer à l'alimentation de la source de lumière.

De manière avantageuse, la couche formant la deuxième électrode est réalisée en un matériau transparent, par exemple en polymère conducteur transparent ou en oxyde d'indium-étain (aussi appelé ITO).

Le cas échéant, la couche formant la source de lumière est disposée entre les couches formant les première et deuxième électrodes.

Ainsi, de la lumière émise depuis l'extérieur du dispositif vers la face réfléchissante traverse l'une des électrodes, puis cette lumière est réfléchie par la face réfléchissante et traverse de nouveau cette électrode.

Dans un exemple de mise en oeuvre de l'invention, la couche formant la source de lumière comporte au moins une strate réalisée en un matériau semi-conducteur organique et capable d'émettre de la lumière. Cette couche est disposée entre les couches formant les première et deuxième électrodes. Préférentiellement, la source de lumière comporte au moins une strate capable d'émettre de la lumière, cette strate étant encapsulée entre une strate réalisée en un matériau semi-conducteur de type P et une strate réalisée en un matériau semi-conducteur de type N. Si on le souhaite, la source de lumière comporte au moins quinze strates dont au moins une strate émettrice de lumière, notamment au moins quarante strates dont au moins une strate émettrice de lumière.

Un rayon lumineux émis par cette couche semi-conductrice organique traverse donc la deuxième électrode et peut apparaître comme provenant de la première électrode.

Eventuellement, la plaque multicouche comporte une couche superficielle électriquement isolante, notamment réalisée en un matériau transparent, par exemple en verre ou en plastique.

Un rayon lumineux provenant de l'extérieur du dispositif et atteignant une face réfléchissante peut ainsi traverser plusieurs couches de matière, notamment la couche superficielle, la deuxième électrode et la couche semi-conductrice organique, pour atteindre cette face réfléchissante et être réfléchie.

Avantageusement, la source de lumière est une source surfacique de lumière.

Par exemple, la surface d'émission de la source de lumière est supérieure à 1 cm², voire supérieure à 10 cm².

Préférentiellement, la plaque multicouche est de type diode électroluminescente organique (OLED).

Le cas échéant, la source de lumière a un rayonnement de type lambertien.

Dans un autre exemple de mise en oeuvre de l'invention, la source de lumière est extérieure à la plaque sur laquelle est formée la face réfléchissante associée à cette source de lumière.

La source de lumière peut être en contact avec cette plaque ou, en variante, la source de lumière peut être disposée à distance non nulle de cette plaque.

Le cas échéant, la plaque comporte une ou plusieurs couches semi-réfléchissante.

Cette couche forme par exemple un miroir, notamment un miroir sans tain.

Un exemple de réalisation d'un miroir sans tain est de déposer, par exemple sous vide, une couche de métal, notamment d'aluminium, de 0,05 µm d'épaisseur sur un substrat transparent, par exemple en verre.

En variante, le miroir peut être un miroir sélectif en bande passante, ou un réflecteur interférentiel.

Ce type de miroir offre l'avantage de ne réfléchir que les rayons lumineux présentant une longueur d'onde dans une plage de longueurs d'onde prédéterminée.

Dans ce mode de réalisation, la plaque comporte alors une couche transparente à l'arrière de laquelle est déposée une couche formant le réflecteur interférentiel.

La plage de longueurs d'onde du réflecteur interférentiel est choisie de manière à ce que la lumière réfléchie par le catadioptre soit colorée, par exemple rouge pour un catadioptre arrière ou orange pour un catadioptre latéral.

Le cas échéant, la plage peut être choisie de manière à ce que la lumière réfléchie par le catadioptre soit de la même couleur que la lumière émise par la source de lumière.

De cette manière, le rendement de la source de lumière n'est pas dégradé.

Un réflecteur sélectif peut notamment être réalisé sous forme d'un réflecteur multicouches interférentiel tel qu'un miroir de Bragg ou d'un hologramme.

Dans un exemple de mise en oeuvre de l'invention, la source de lumière est couplée à un élément optique capable de diriger de la lumière émise par la source de lumière vers la plaque.

Par exemple, l'élément optique peut être choisi, de manière non limitative, parmi : un réflecteur, un guide de lumière, une lentille ou une combinaison de plusieurs de ces éléments optiques.

En variante, la source de lumière est capable d'émettre de la lumière directement vers la plaque lumineuse.

Ainsi, dans le cas de l'utilisation d'un miroir semi-réfléchissant, lorsque la source émet de la lumière, cette lumière traverse le miroir semi-réfléchissant et, pour un observateur du dispositif, la face réfléchissante formée par le miroir semi-réfléchissant du dispositif peut apparaître comme émettant de la lumière.

Dans un exemple de mise en oeuvre de l'invention, la source de lumière comporte une diode électroluminescente (LED).

Dans un exemple de mise en oeuvre de l'invention, le dispositif est agencé pour émettre de la lumière pour réaliser au moins une partie, notamment la totalité, d'une fonction photométrique, notamment une fonction photométrique de signalisation.

Cette fonction photométrique peut être par exemple un feu de position, un feu stop, un indicateur de direction, un feu de gabarit (aussi appelé side-marker).

L'invention pourra être mieux comprise à la lecture de la description détaillée qui va suivre, d'exemples de mise en oeuvre non limitatifs de l'invention, et à l'examen du dessin annexé, sur lequel :
- les figures 1 à 4 représentent, schématiquement et partiellement, respectivement en vue de derrière, en vue de face, en coupe et en perspective, un dispositif selon un premier exemple de mise en oeuvre de l'invention ;
- la figure 5 représente, schématiquement et partiellement, en coupe, un dispositif selon un deuxième exemple de mise en oeuvre de l'invention ; et
- la figure 6 représente, schématiquement et partiellement, en coupe, un dispositif selon un troisième exemple de mise en oeuvre de l'invention.

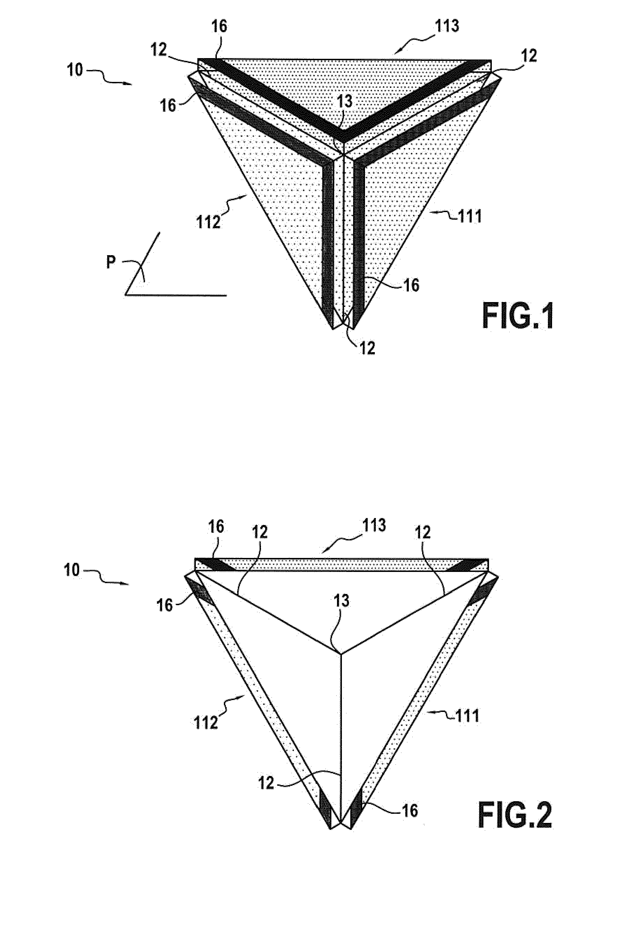

On a représenté sur les figures 1 et 2 un dispositif optique 10 pour un véhicule automobile.

Ce dispositif 10 comporte trois plaques multicouches 111, 112 et 113, présentant chacune une superficie d'environ 4,5 cm².

Chaque plaque multicouches 111, 112 et 113 présente un contour triangulaire isocèle.

Ces plaques multicouches 111, 112 et 113 sont jointives deux à deux par un bord ou côté 12 du contour en triangle isocèle et présentent un sommet commun 13. Les bords 12 des plaques 111, 112 et 113 sont maintenus jointifs de manière permanente au moyen de colle.

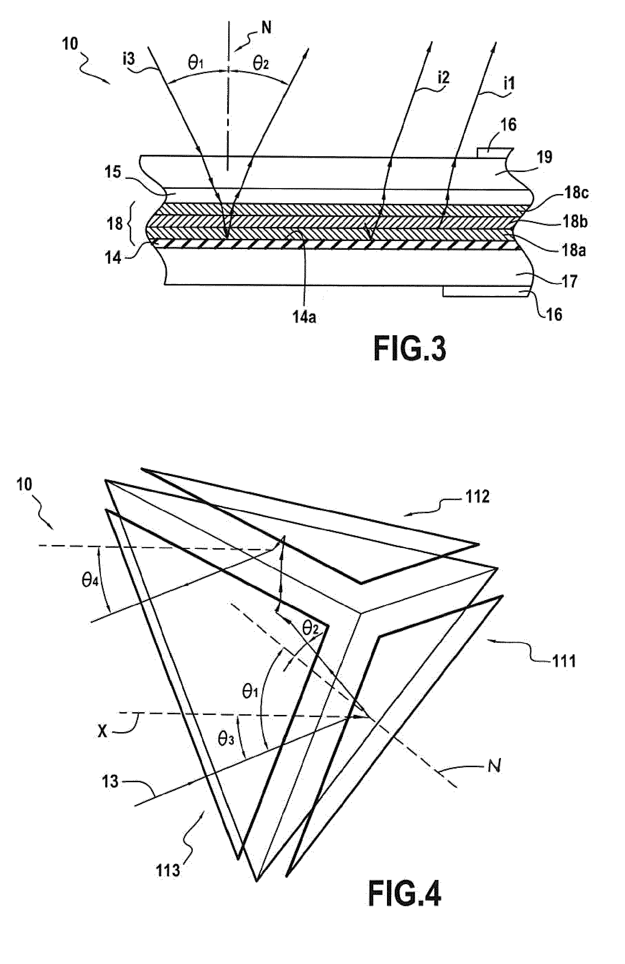

Comme le montre la vue en coupe du dispositif 10 par un plan P (voir la figure 3), chaque plaque multicouches comporte, dans le présent exemple, un empilement des couches suivantes :
- une couche substrat 17 réalisée en verre,
- une couche cathode 14 présentant une face réfléchissante 14a réalisée en aluminium,
- une couche génératrice de lumière 18 comportant une strate 18a de transport d'électrons, une strate 18b émettrice de lumière et une strate 18c d'injection de trous, ces couches 18a, 18b et 18c étant réalisées en plusieurs matériaux organiques transparents différents,
- une couche anode 15 transparente réalisée en oxyde d'indium-étain, et
- une couche de protection isolante 19 transparente réalisée en verre.

La couche substrat 17 comporte deux pistes conductrices d'électricité 16 pour alimenter électriquement, à l'aide des couches anode 15 et cathode 14, la couche génératrice de lumière 18 de manière à ce que celle-ci puisse émettre de la lumière. Ces pistes conductrices 16 s'étendent sur une partie du pourtour de la plaque multicouches correspondante.

Les pistes conductrices 16 des plaques multicouches du dispositif 10 sont par exemple connectées entre elles en série par l'intermédiaire d'une carte électrique flexible, non représentée.

Lorsque la couche génératrice de lumière 18 est alimentée électriquement par un courant électrique circulant entre les couches anode et cathode, la strate 18b émet par électroluminescence des rayons lumineux i1 vers l'extérieur de la plaque multicouches et des rayons lumineux i2 vers l'intérieur de la plaque multicouches.

Par exemple, les rayons i1 traversent successivement la strate 18c, la couche anode 15 et la couche de protection 19 avant de se propager dans le milieu extérieur.

Les rayons i2 traversent la strate 18a pour être réfléchis par la face réfléchissante 14a de la cathode 14. Après réflexion, ces rayons i2 sortent de la plaque multicouches après avoir traversé les couches 18, 15 et 19.

Ainsi, lorsque les plaques 111, 112 et 113 sont alimentées électriquement, celles-ci apparaissent comme trois surfaces émettrices de lumière formant ensemble une fonction de signalisation, par exemple un feu de position ou un side-marker.

Les faces réfléchissantes 14a sont agencées à la manière d'un catadioptre pour qu'un rayon lumineux provenant par exemple d'un projecteur d'un véhicule tiers et atteignant l'une des plaques multicouches 111, 112 et 113 soit réfléchi vers une autre de ces plaques multicouches 111, 112 et 113, comme illustré sur les figures 3 et 4.

Pour un rayon lumineux i3 atteignant l'une des plaques multicouches 111, 112 et 113 avec un angle d'incidence θ1, mesuré par rapport à la normale N à la plaque , ce rayon i3 :
- traverse successivement les couches de protection 19, anode 15 et génératrice de lumière 18,
- est réfléchi par la face réfléchissante 14a de la couche cathode 14, et
- traverse successivement les couches génératrice de lumière 18, anode 15 et isolante 19,
avant de quitter cette plaque multicouches selon un angle θ2 sensiblement égal à θ1.

Considérons ce rayon lumineux i3 atteignant le dispositif 10 avec un angle d'incidence θ3, mesuré par rapport à un axe optique X du dispositif.

Lorsque ce rayon i3 atteint la plaque multicouches 111, ce rayon i3 est :
- réfléchi par la plaque 111 vers la plaque 112,
- réfléchi par la plaque 112 vers la plaque 113, et
- réfléchi par la plaque 113 vers l'extérieur du dispositif 10,
de manière à ce qu'il quitte le dispositif 10 selon un angle θ4, mesuré par rapport à l'axe optique X.

Dans l'exemple décrit, les faces réfléchissantes 14a sont agencées de manière à ce que l'angle θ4 soit sensiblement supérieur à l'angle d'incidence θ3 d'un degré, de manière à ce que le rayon i4 soit redressé par le dispositif 10 vers les yeux du conducteur du véhicule tiers.

Dans l'exemple de mise en oeuvre qui vient d'être décrit, la source de lumière fait partie de la plaque multicouches elle-même.

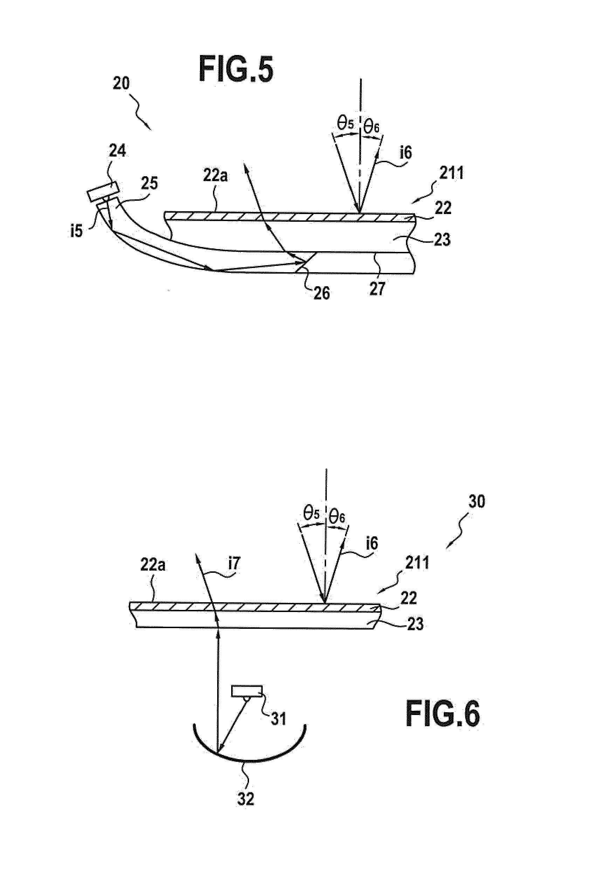

On a représenté sur la figure 5 un dispositif optique 20 selon un autre exemple de mise en oeuvre de l'invention, dans lequel la source de lumière ne fait pas partie de la plaque.

Dans cet exemple, le dispositif optique 20 comporte trois plaques multicouches 211, 212 et 213, disposées comme les plaques 111, 112 et 113 de l'exemple précédent, mais qui présentent une structure différente.

Ainsi, chacune de ces plaques 211, 212 et 213 comporte :
- une couche semi-réfléchissante 22 de 0,05 µm d'épaisseur réalisée en aluminium et présentant une face réfléchissante 22a, cette couche 22 étant la couche la plus extérieure,
- une couche substrat 23 transparente réalisée en matière plastique.

Le dispositif optique 20 comporte également une source de lumière telle qu'une diode électroluminescente 24 extérieure aux plaques 211, 212 et 213 et couplée à un guide de lumière 25 en forme de nappe.

Le guide de lumière 25 comporte un biseau 26, disposé contre une face de sortie 27 du guide, cette face 27 étant en contact avec la couche substrat 23.

Lorsque la diode 24 est alimentée électriquement, celle-ci émet des rayons lumineux i5 qui sont guidés dans le guide 25 par réflexion totale.

Lorsque les rayons i5 arrivent à hauteur du biseau 26, ils :
- sont réfléchis par ce biseau 26 dans la plaque 221 à travers la face de sortie 27 du guide 25, puis
- traversent la plaque 211 avant de se propager dans le milieu extérieur.

Ainsi, lorsque les diodes 24 du dispositif 20 sont alimentées électriquement, les plaques 221 apparaissent comme trois surfaces émettrices de lumière formant ensemble une fonction de signalisation, par exemple un feu de position ou un side-marker.

Pour un rayon lumineux i6 provenant par exemple d'un projecteur d'un véhicule tiers et atteignant une plaque multicouche 221 avec un angle d'incidence θ6, ce rayon i6 est réfléchi par la face réfléchissante 22a de cette plaque 221 avec un angle θ6 sensiblement égal à θ5.

Les trois faces réfléchissantes 22a du dispositif 20 forment ainsi un catadioptre, comme décrit en référence à l'exemple précédent.

On a représenté sur la figure 6 un dispositif optique 30 sensiblement analogue au dispositif 20 de la figure 5, à l'exception du type de source de lumière.

Le dispositif optique 30 comporte une diode électroluminescente 31 et un réflecteur 32 de type parabolique.

Le réflecteur 32 est agencé pour réfléchir de la lumière émise par la diode 31 vers la plaque 221.

Lorsque la diode 31 est alimentée électriquement, celle-ci émet des rayons lumineux i7 vers le réflecteur 32. Ces rayons i7 sont :
- réfléchis par le réflecteur 32 vers la plaque 221, puis
- traversent la plaque 211 avant de se propager dans le milieu extérieur.

## Revendications

1. Dispositif optique (10 ;20 ;30), notamment de véhicule automobile, comportant :
- au moins trois faces réfléchissantes (14a ; 22a) agencées de manière à ce qu'un rayon lumineux (i3 ; i6) provenant de l'extérieur du dispositif et atteignant l'une de ces faces soit réfléchi vers une autre de ces faces,
- au moins une source de lumière (18 ; 24 ; 32) capable d'émettre des rayons lumineux (i1,i2;i5;i7) pour au moins certains desquels le trajet est modifié par l'une au moins des faces réfléchissantes de sorte que ces rayons lumineux participent au moins partiellement, voire totalement, à une fonction photométrique réglementaire du dispositif, notamment une fonction de signalisation.

2. Dispositif selon la revendication 1, **caractérisé en ce que** les faces réfléchissantes sont agencées pour qu'un rayon lumineux atteignant le dispositif avec une direction d'incidence (θ3) prédéterminée soit réfléchi par ce dispositif dans une direction (θ4) sensiblement parallèle à cette direction d'incidence.

3. Dispositif selon la revendication 1, **caractérisé en ce que** la direction du rayon lumineux réfléchi est différente de la direction d'incidence, ces directions faisant entre elles un angle supérieur à 0,3° degrés, notamment supérieur à 1° degré ou supérieur à 1,5° degrés voire supérieur à 2° degrés.

4. Dispositif selon l'une des revendications précédentes, **caractérisé en ce que** le dispositif comporte une unique source de lumière.

5. Dispositif selon l'une des revendications précédentes, **caractérisé en ce que** chaque face du dispositif est associée à une unique source de lumière.

6. Dispositif selon l'une des revendications précédentes, **caractérisé en ce qu'il** comporte au moins une plaque (111,112,113;221,212,213) comportant au moins une couche (14;22) agencée pour former au moins l'une des faces réfléchissantes.

7. Dispositif selon la revendication précédente, **caractérisé en ce que** la plaque multicouche comporte au moins une couche (18) agencée pour former la source de lumière associée à cette face réfléchissante.

8. Dispositif selon l'une des revendications précédentes, **caractérisé en ce que** la couche formant la face réfléchissante forme une première électrode (14) capable de participer à l'alimentation électrique de la source de lumière associée à cette face réfléchissante.

9. Dispositif selon la revendication précédente, **caractérisé en ce que** la plaque multicouche comporte, outre cette première électrode, une couche (15) formant une deuxième électrode, capable de participer à l'alimentation de la source de lumière.

10. Dispositif selon la revendication précédente, **caractérisé en ce que** la couche formant la source de lumière comporte au moins une strate (18b) réalisée en un matériau semi-conducteur organique et capable d'émettre de la lumière, cette couche étant disposée entre les couches formant les première et deuxième électrodes.

11. Dispositif selon la revendication 6, **caractérisé en ce que** la source de lumière (24;31) est extérieure à la plaque (211) sur laquelle est formée la face réfléchissante associée à cette source de lumière.

12. Dispositif selon la revendication précédente, **caractérisé en ce que** la plaque multicouche formant l'au moins une face réfléchissante comporte une ou plusieurs couches (22) semi-réfléchissantes.

13. Dispositif selon l'une des revendications précédentes, **caractérisé en ce que** la source de lumière (24;31) est couplée à un élément optique (25;32) capable de diriger de la lumière émise par la source de lumière vers la plaque.

14. Dispositif selon l'une des revendications précédentes, **caractérisé en ce qu'il** est agencé pour émettre de la lumière pour réaliser au moins une partie, notamment la totalité, d'une fonction photométrique, par exemple un feu de position, un feu stop, un feu de gabarit ou un side-marker.
